# FASCICULE DE BREVET EUROPEEN

(11) **EP 3 458 820 B1**
(45) Date de publication et mention de la délivrance du brevet: **19.02.2020**
(21) Numéro de dépôt: 16729960.1
(22) Date de dépôt: 17.05.2016
(51) Int. Cl.: G01K 1/08, G01K 7/02

(54) **PROCEDE DE REALISATION D'UNE SONDE DE TEMPERATURE**
VERFAHREN ZUR HERSTELLUNG EINES TEMPERATURSENSORS
METHOD FOR PRODUCING A TEMPERATURE SENSOR

(43) Date de publication de la demande: 27.03.2019
(73) Titulaire: CMR Group, 13013 Marseille (RE)
(72) Inventeur: FOUACHE, Pascal, 13590 Meyreuil (FR)
(74) Mandataire: Roman, Alexis
(86) Numéro de dépôt international: PCT/FR2016/051157
(87) Numéro de publication internationale: WO 2017/198910

(56) Documents cités:
- FR-A1- 2 863 358
- FR-A1- 3 035 500
- JP-A- 2005 241 481
- US-A- 4 484 018
- "CABLES DE PYROMETRIE ET DE MESURE" In: "OMERIN - Les câbles de l'extrême", 1 janvier 2000 (2000-01-01), OMERIN, F - 63600 Ambert (France), XP055252458, pages 104-117, cité dans la demande page 106 page 110

## Description

### Domaine technique de l'invention.

L'invention a pour objet un procédé de réalisation d'une sonde de température.

L'invention concerne le domaine technique des sondes destinées à mesurer la température de pièces de machines ou de fluides circulant dans des tuyauteries de machines en général, comme les gaz d'échappement de moteurs thermiques, de turbines, de compresseurs et autres installations analogues, destinés au domaine industriel en général, notamment à des fins de contrôle et de réglage desdites machines. L'invention concerne plus spécifiquement le domaine technique des sondes adaptées pour mesurer des températures supérieures à 300°C.

### État de la technique.

Les sondes de températures sont bien connues de l'art antérieur et par exemple décrites dans les documents brevets FR2.863.358 (CMR) ou JP 2005.241481 (NGK SPARK PLUG CO).

Certaines pièces de machines ou certains gaz d'échappement de moteurs thermiques peuvent atteindre des températures importantes, supérieures à 300°C, par exemple de l'ordre de 600°C, voire 1000°C, voire plus. Aussi, les sondes de température doivent-elles être conçues de manière robuste et résistante pour fonctionner sous de telles contraintes thermiques et délivrer des résultats fiables et précis.

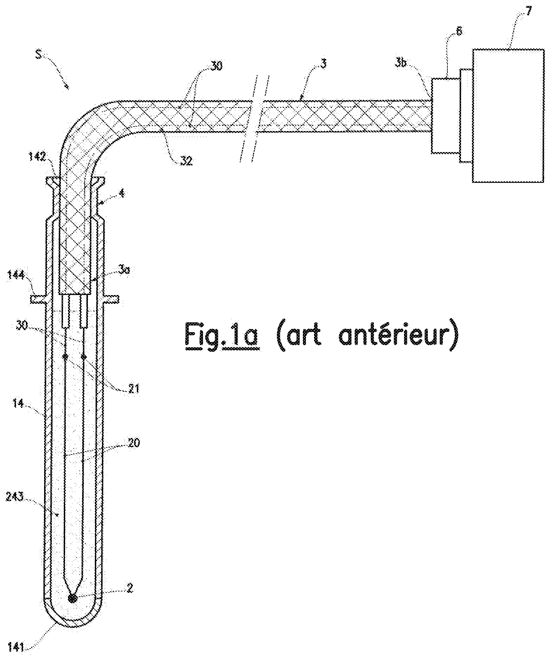

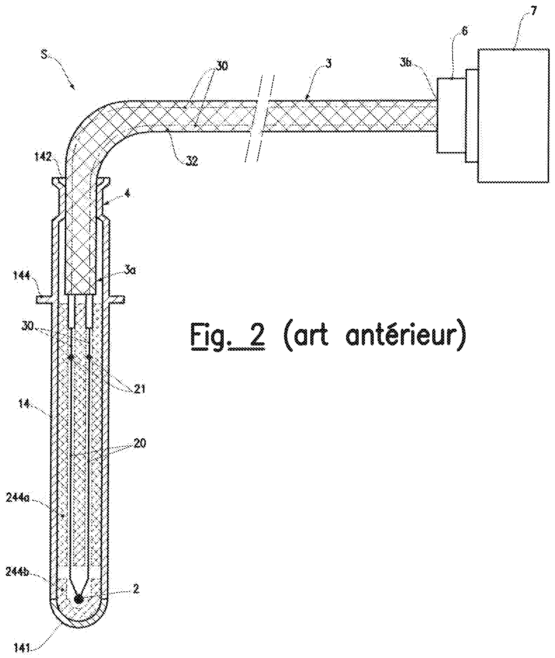

Pour cela, et comme cela apparait sur les figures 1a et 2, les sondes S de température comprennent généralement un câble 3 connecté à un fourreau de protection 14 dans lequel est installé un élément de mesure de la température 2 pouvant se présenter sous la forme d'un thermocouple, d'une sonde de platine (ex : PT50, PT100, PT200, PT500 ou PT1000) ou d'une thermistance (ex : NTC ou PTC). Des éléments de mesure de la température sont par exemple décrits dans le document: « CABLES DE PYROMETRIE ET DE MESURE », In : "OMERIN - Les câbles de l'extrême", 1 janvier 2000, OMERIN, F - 63600 Ambert (France), page 104-117*.*

Le fourreau 14 est placé en contact du fluide ou de la pièce dont la température doit être mesurée.

Le fourreau 14 présente une extrémité fermée 141 et une extrémité 142 d'entrée de fils. Pour simplifier la connexion des deux fils conducteurs 30 du câble 3 à l'élément de mesure 2, l'extrémité fermée 141 peut être rapportée et soudée au fourreau 14.

Le câble 3 présente généralement une première extrémité 3a reliée au fourreau 14 au niveau de son extrémité d'entrée 142. Une pièce 4, assure la liaison, par exemple par sertissage ou par tout autre moyen, entre le câble 3 et le fourreau 14 aboutés. Cette pièce de liaison 4 peut faire partie intégrante du fourreau 14 ou se présenter sous la forme d'une bague rapportée.

Le câble 3 présente également une seconde extrémité 3b reliée à un appareil 7 de traitement des signaux délivrés par l'élément de mesure 2, au moyen d'une connectique adaptée 6.

Dans une première forme de réalisation connue de l'art antérieur et illustrée sur la figure 1a, le câble 3 ne peut pas être directement exposé aux températures élevées. Les deux fils de connexions 30 sont entourés d'une chemise de protection 32 pouvant résister à des températures de l'ordre de 150°C à 300°C seulement. Dans le fourreau 14, les fils 30 sont reliés aux fils de connexion 20 de l'élément de mesure 2 par des soudures 21. Ces fils 20 sont entourés d'un isolant thermique 243 usuellement à base de magnésie. Grâce à cette conception, le fourreau 14 peut être soumis à des températures élevées pouvant aller jusqu'à 1000°C. Le câble 3 qui est moins sollicité thermiquement n'a pas besoin de résister à de telles températures.

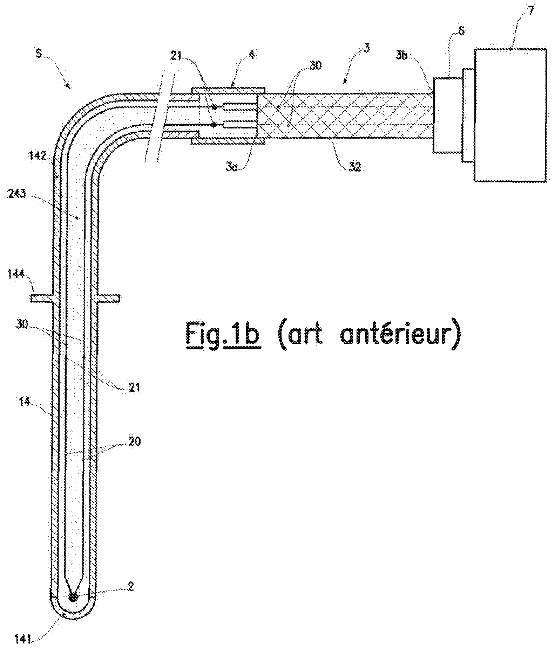

Si l'environnement extérieur est soumis à une température supérieure à 300°C, le câble 3 est davantage sollicité thermiquement. Aussi, on peut utiliser un fourreau 14 plus long, se présentant sous la forme d'un câble semi-rigide du type schématisé sur la figure 1b et communément appelé câble chemisé à isolant minéral. Le fourreau 14 est dans ce cas un tube métallique à faible épaisseur de paroi pouvant être plié et conformé à la main. La connexion 21 entre les fils 30 et les fils 20 (jonction froide) est davantage éloignée de l'élément de mesure 2, et donc du point chaud, que sur la figure 1a.

Bien que largement utilisé, ce type de sonde présente néanmoins des inconvénients. Du fait de sa conception et des opérations de soudage à effectuer pour connecter les fils 30 du câble 3 aux fils 20 du fourreau 14, opérations par ailleurs manuelles dans de nombreux cas, le coût de fabrication d'une telle sonde est élevé. De plus, la présence de magnésie qui est présente dans le fourreau 14 et qui est hydrophile, a tendance à capter l'humidité, si bien que le signal transmis par les fils conducteurs 20 de l'élément de mesure 2, en direction de l'appareil d'analyse 7, peut se dégrader par suite de courts-circuits, de microcoupures, ou de défaut d'isolation et donner des résultats erronés.

Pour remédier à cela, on connait des sondes du type illustré sur la figure 2, et où la magnésie est remplacée par une enveloppe rigide en céramique 244a et dans laquelle sont logés les fils 20. L'élément de mesure 2 est également logé dans un embout en céramique 244b agencé au niveau de l'extrémité fermée 141 du fourreau 14. Si les problèmes liés à la magnésie sont évités, en revanche, le coût d'une telle sonde reste élevé du fait que les éléments 244a et 244b sont en céramique. La céramique étant en outre relativement fragile, il est nécessaire de manipuler ces sondes avec précaution.

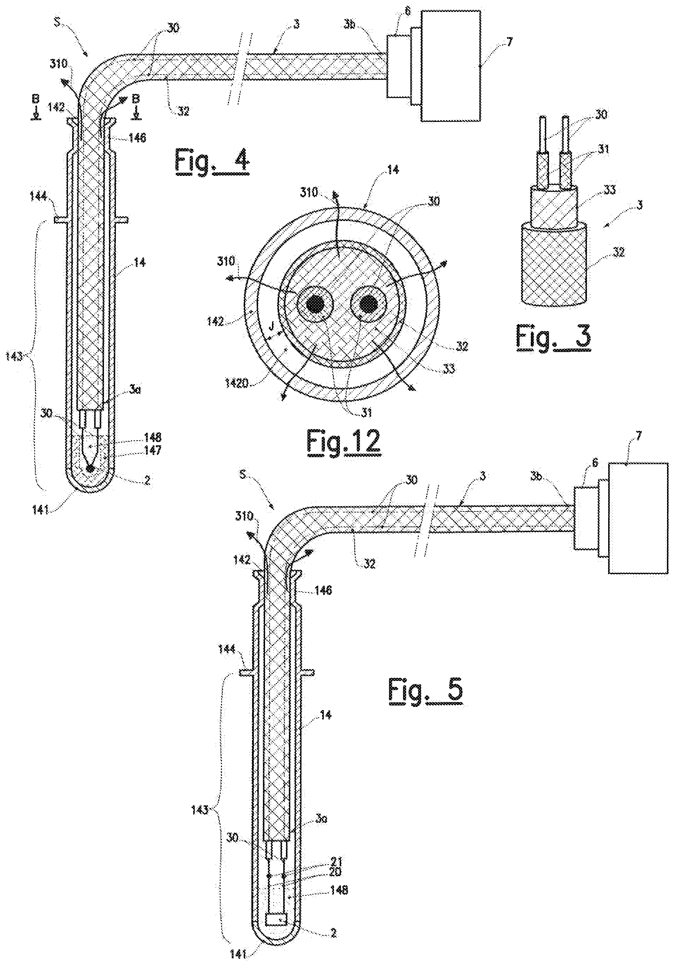

En se rapportant à la figure 3, pour des hautes températures (par exemple supérieures à 300°C, voire supérieures à 600°C), on peut être tenté d'utiliser un câble souple 3 dit « haute température », formé par des fils conducteurs 30 enrobés dans un matériau isolant électrique 31 à base de fibres minérales, du type fibres de verre, lesquelles fibres sont imprégnées d'un liant adhésif ou colle. Les fils 30 et le matériau isolant 31 sont entourés d'une tresse de protection mécanique externe 32, se présentant par exemple sous la forme d'un treillis métallique. D'autres fibres minérales 33 peuvent être disposées entre la tresse 32 et le matériau isolant 31.

Dans la forme de réalisation schématisée sur la figure 4, la sonde S est pourvue de ce câble 3 « hautes températures » dont une partie est logée dans le fourreau 14. Les fils conducteurs 30 sont connectés à l'élément de mesure 2, de sorte que lesdits fils enrobés dans le matériau isolant 31 arrivent dans le fourreau 14 par son extrémité d'entrée 142. Une telle sonde de température est intéressante à utiliser car elle est plus simple et moins onéreuse à fabriquer que les sondes des réalisations précédentes dans la mesure où le câble 3, qui est inséré dans le fourreau 14, résiste déjà à des températures élevées, les fils logés dans ledit fourreau ne nécessitant pas d'isolation thermique supplémentaire (et notamment ni magnésie, ni céramique).

Cependant, durant leur utilisation, lorsque le fourreau 14 est soumis à des températures comprises entre 300°C et 600°C, la demanderesse a remarqué l'apparition de courts-circuits lors de la transmission du signal envoyé depuis l'élément de mesure 2, en direction de l'appareil d'analyse extérieur 7. Ces courts-circuits nuisent à la qualité du signal mesuré par l'appareil 7 et, par suite, à la fiabilité des résultats et au fonctionnement de la machine dont les paramètres de température doivent être surveillés.

L'objectif principal de la présente invention est de remédier à ces inconvénients.

En particulier, un objectif de l'invention est de proposer un procédé permettant d'obtenir une sonde de température pourvue d'un câble haute température, qui soit exempte des dysfonctionnements ci-dessus mentionnés, de manière à délivrer des résultats fiables.

Un autre objectif de l'invention est de proposer une sonde de température dont la conception est simple et dont le coût économique est modéré.

### Divulgation de l'invention.

La solution proposée par l'invention est un procédé de réalisation d'une sonde de température, ladite sonde comprenant :
- un fourreau de protection dans lequel est installé un élément de mesure de la température, lequel fourreau présente une extrémité fermée, une extrémité d'entrée de fils, et une partie active qui, en usage, est en contact avec la pièce ou le fluide dont la température doit être mesurée,
- un câble présentant une première extrémité reliée au fourreau au niveau de son extrémité d'entrée et une seconde extrémité adaptée pour être reliée à un appareil de traitement des signaux délivrés par l'élément de mesure,
ledit procédé consistant à :
- utiliser un câble souple formé par des fils conducteurs enrobés dans un matériau isolant électrique à base de fibres minérales imprégnées d'un liant adhésif, lesdits fils et ledit matériau isolant étant entourés d'une tresse de protection externe,
- connecter les fils conducteurs à l'élément de mesure, de sorte que lesdits fils enrobés dans le matériau isolant électrique arrivent dans la partie active du fourreau.

Le procédé est remarquable par le fait que :
- avant la première utilisation de la sonde pour mesurer une température, ledit procédé comprend des étapes consistant à : - chauffer le fourreau à une température telle que le matériau isolant électrique contenu au moins dans la partie active dudit fourreau émette des vapeurs ; - et évacuer ces vapeurs hors du fourreau jusqu'à épuisement de celles-ci,
- les étapes de chauffage du fourreau de protection et d'évacuation des vapeurs sont maintenues jusqu'à ce que le liant adhésif du matériau isolant électrique contenu dans la partie active du fourreau se trouve sous forme de poudre sèche.

En effet, après différents essais pour comprendre les raisons pour lesquelles la qualité des signaux n'était pas optimale par suite des courts-circuits, la demanderesse a constaté, de façon inattendue, que les problèmes provenaient du liant adhésif employé dans le matériau isolant électrique. En effet, il est apparu que certains composés chimiques du liant adhésif se liquéfiaient et/ou se vaporisaient sous l'action de la chaleur et perdaient leurs propriétés isolantes pour devenir conducteurs. Quand la sonde est utilisée et que le fourreau est sollicité thermiquement, le matériau isolant et, de fait, le liant adhésif, montent en température, provoquant le changement d'état de ces composés chimiques que l'on peut qualifier de « perturbateurs ». En effet, lorsque ces derniers passent à l'état liquide ou à l'état de vapeur, ils perdent leurs propriétés isolantes, deviennent conducteurs et sont susceptibles de produire des courts-circuits entre les fils conducteurs et/ou des fuites de signal par le fourreau.

Grâce à l'invention, la sonde de température ainsi traitée préalablement à son utilisation, n'est plus sujette aux problèmes de perturbations des signaux transmis par l'élément de mesure. Cela est dû à l'absence totale ou quasi-totale des composés perturbateurs, au moins dans la partie active du fourreau. Le matériau isolant se trouvant à l'extérieur du fourreau, dans la partie du câble non traitée (sa majeure partie) ne voit pas ses caractéristiques d'isolement électriques affaiblies par un éventuel changement de phase des composés chimiques perturbateurs. En effet, ces derniers ne sont pas retenus dans le câble, mais s'échappent de celui-ci dès qu'ils passent à l'état vapeur, avant de créer des court-circuits. Par ailleurs, le coût de fabrication d'une telle sonde ainsi traitée reste modéré.

D'autres caractéristiques avantageuses du procédé selon l'invention sont listées ci-après, chacune de ces caractéristiques pouvant être considérée seule, indépendamment des caractéristiques remarquables précitées, et faire l'objet, le cas échéant, d'une ou plusieurs demandes de brevets divisionnaires :
- On ménage préférentiellement une ouverture au niveau de l'extrémité d'entrée du fourreau de protection, les vapeurs formées lors du chauffage du fourreau s'évacuant par cette ouverture.
- On peut également ménager des trous dans la paroi latérale du fourreau de protection, par lesquels s'évacuent les vapeurs formées lors du chauffage dudit fourreau.
- L'étape de chauffage peut être réalisée en plaçant au moins la partie active du fourreau de protection dans un appareil de chauffage.
- On chauffe avantageusement le fourreau de protection dans une plage de température comprise entre 300°C et 600°C, préférentiellement comprise entre 450°C et 500°C.
- Le chauffage peut être maintenu pendant au moins 24 heures, pendant 48 heures ou pendant 72 heures.

Un autre aspect non couvert par les revendications concerne une sonde de température comprenant :
- un fourreau de protection dans lequel est installé un élément de mesure de la température, lequel fourreau présente une extrémité fermée, une extrémité d'entrée de fils, et une partie active qui, en usage, est en contact avec la pièce ou le fluide dont la température doit être mesurée,
- un câble souple présentant une première extrémité reliée au fourreau au niveau de son extrémité d'entrée et une seconde extrémité adaptée pour être reliée à un appareil de traitement des signaux délivrés par l'élément de mesure, ledit câble étant formé par des fils conducteurs enrobés dans un matériau isolant électrique à base de fibres minérales imprégnées d'un liant adhésif, lesdits fils et ledit matériau isolant étant entourés d'une tresse de protection externe,
- les fils conducteurs étant connectés à l'élément de mesure, de sorte que lesdits fils enrobés dans le matériau isolant arrivent dans la partie active du fourreau par son extrémité d'entrée.

Cette sonde est remarquable en ce que le liant adhésif du matériau isolant électrique contenu au moins dans la partie active du fourreau se présente sous la forme de poudre inerte et sèche et est exempt de composés chimiques susceptibles de se liquéfier et/ou de se vaporiser et devenir conducteurs, lorsque ledit matériau isolant électrique est chauffé dans des conditions normales de pression, à une température comprise entre 300°C et 600°C.

D'autres caractéristiques avantageuses de la sonde sont listées ci-après, chacune de ses caractéristiques pouvant être considérées seules, indépendamment des caractéristiques remarquables précitées, et faire l'objet, le cas échéant, d'une ou plusieurs demandes de brevets divisionnaires :
- Le câble est préférentiellement formé par deux fils conducteurs réalisés dans des matériaux différents, l'élément de mesure étant réalisé en reliant ces deux fils conducteurs par une soudure chaude de manière à former un thermocouple.
- L'élément de mesure est préférentiellement un thermocouple logé dans une enveloppe en céramique, laquelle enveloppe est noyée dans un ciment réfractaire.
- La tresse de protection externe préférentiellement est une tresse métallique.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1a précitée schématise une sonde de température selon une première forme de réalisation connue de l'art antérieur,
- la figure 1b précitée schématise une variante de la sonde de température illustrée sur la figure 1a,
- la figure 2 précitée schématise une sonde de température selon une seconde forme de réalisation connue de l'art antérieur,
- la figure 3 illustre la conception d'un câble dit « haute température » et qui peut être utilisé pour réaliser une sonde de température conforme à l'invention,
- la figure 4 précitée schématise une sonde de température,
- la figure 5 schématise une sonde de température, dans une variante de réalisation,
- la figure 6 illustre une sonde de température durant l'étape de chauffage de la sonde dans un appareil de chauffage,
- la figure 7 illustre une sonde de température durant l'étape de chauffage de la sonde dans un autre appareil de chauffage,
- la figure 8 illustre une sonde de température dans une autre forme de réalisation, durant l'étape de chauffage de la sonde dans un appareil de chauffage,
- la figure 9 est une vue en coupe transversale agrandie de la sonde selon la ligne A-A de la figure 8, montrant l'évacuation des vapeurs,
- la figure 10 schématise une sonde de température, dans une autre variante de réalisation,
- la figure 11 représente schématiquement le montage de la sonde dans l'échappement d'un moteur traversé par les gaz,
- la figure 12 est une vue en coupe transversale agrandie de la sonde selon la ligne B-B de la figure 4, montrant l'évacuation des vapeurs.

### Mode préféré de réalisation de l'invention.

La sonde S est adaptée pour mesurer la température de pièces de machines ou de fluides circulant dans des tuyauteries de machines comme les gaz d'échappement de moteurs thermiques.

Elle est du type décrite précédemment en référence à la figure 4. Elle est pourvue d'un câble souple 3 « hautes températures » (figure 3) formé par deux fils conducteurs 30, tous deux réalisés dans un matériau identique (ex : cuivre), ou dans des matériaux différents (ex : «CHROMEL/ALUMEL »). Les fils 30 sont enrobés dans un matériau isolant électrique 31 à base de fibres minérales, par exemple du type fibres céramiques ou soie de verre, lesquelles fibres sont imprégnées d'un liant adhésif ou colle, par exemple à base de Siloxane, de decanedioate de Dibutyle (plastifiant) et de 3,5,24-Trimethyltetracontame.

Les fils 30 et le matériau isolant 31 sont entourés d'une tresse de protection externe 32, présentant préférentiellement la forme d'un treillis métallique, par exemple en cuivre nickelé ou en inox. D'autres fibres minérales 33 (fibres céramique ou soie de verre) peuvent être disposées entre la tresse 32 et le matériau isolant 31. Le câble 3 ainsi formé présente une certaine souplesse permettant de placer la sonde S dans des espaces confinés. Il peut avoir une longueur comprise entre 10 cm et 10 m. A titre d'exemple, on utilise un câble 3 commercialisé par la société OMERIN sous la référence COUPLIX® K-BIMSI-SIF Round IEC 2x0.34 mm², mais d'autres fabricants offrent ces câbles souples haute température réputés résister à 900°C de température et même au-delà.

La première extrémité 3a du câble 3 est reliée au fourreau 14 au niveau de l'extrémité d'entrée 142 de ce dernier. Sa seconde extrémité 3b est pourvue d'un connecteur de liaison 6 à un appareil d'analyse et de traitement 7 des signaux délivrés par l'élément de mesure 2.

Le fourreau 14 a une forme essentiellement cylindrique. Son diamètre externe est par exemple compris entre 4.5 mm et 30 mm, son épaisseur comprise entre 0.5 mm et 4 mm et sa longueur comprise entre 30 mm et 2000 mm. Il est rigide, (ou semi-rigide de manière à pouvoir être plié manuellement) et réalisé dans un matériau approprié pour résister aux températures à mesurer et au milieu environnant. On utilisera par exemple un acier inoxydable 304L ou 316L jusqu'à des températures d'environ 800°C. Pour des cas d'ambiance corrosive au-delà de 400°C, on utilisera par exemple de l'acier Inconel® ou un acier inoxydable 316Ti.

Le fourreau 14 présente une extrémité fermée 141 et une extrémité 142 d'entrée de fils, laquelle extrémité d'entrée est ouverte. L'élément de mesure 2 est installé dans le fourreau, au niveau de l'extrémité fermée 141. Cette dernière peut être rapportée et soudée au fourreau 14, ce qui facilite le montage de l'élément de mesure 2.

L'élément de mesure 2 peut être du type à thermocouple (figure 4) ou à résistance de mesure à couche mince, sonde de platine (PT50, PT100, PT200, PT500, PT1000) ou d'une thermistance (NTC, PTC) par exemple (figure 5). Un tel élément résistif 2 peut être alors être montée en 2 fils, 3 fils ou 4 fils, en simple ou double élément.

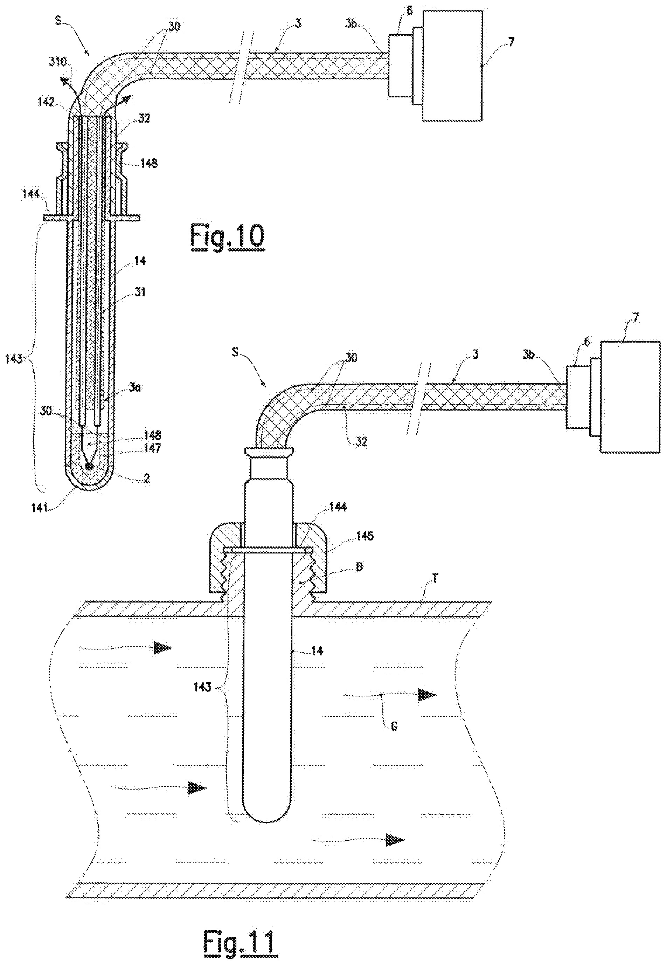

Le fourreau 14 présente également une partie active 143 qui, en usage, est en contact avec la pièce ou le fluide dont la température doit être mesurée. Cette partie active contient l'élément de mesure 2 et est située entre les deux extrémités 141 et 142 du fourreau 14. En particulier, comme illustré sur la figure 11, lorsque la sonde S est montée sur un tuyau de gaz d'échappement T (ou dans une pièce) avec le fourreau 14 à l'intérieur du tuyau (ou de la pièce), la partie active 143 correspond à la partie du fourreau qui se trouve à l'intérieur et éventuellement à proximité extérieure du tuyau T (ou de la pièce) et qui est balayée par les gaz d'échappement G en circulation.

Pour fixer la sonde S au tuyau T (ou à une pièce), une collerette radiale externe 144 est par exemple ménagée autour de la paroi externe du fourreau 14 pour venir en appui sur un bossage B du tuyau T (ou de la pièce). Un organe de serrage, tel qu'un écrou 145, est prévu autour du fourreau 14 pour se visser sur le bossage B en appliquant la collerette 144 contre ledit bossage, garantissant l'étanchéité et le maintien du manchon fourreau 14 et, donc, celui de la sonde S sur le tuyau d'échappement T (ou de la pièce). Dans cette configuration, la partie active 143 correspond à la partie du fourreau qui est située entre la collerette 144 et l'extrémité fermée 141.

La première extrémité 3a du câble 3 est insérée dans le fourreau 14 par son extrémité d'entrée 142.

Sur les figures 4 et 5, l'ensemble constitué par les fils 30, le matériau isolant 31 (et le cas échéant les fibres minérales 33) ainsi que la tresse de protection externe 32, est inséré à l'intérieur du fourreau 14. Une liaison par sertissage 146 ou autre est prévue entre le fourreau 14 et le câble 3 aboutés, au niveau de l'extrémité d'entrée 141, de sorte à solidariser ledit fourreau audit câble et éviter les risques d'arrachement lors de la manipulation de la sonde S.

Dans la variante de réalisation de la figure 10, seul l'ensemble constitué par les fils 30 et le matériau isolant 31 (et le cas échéant les fibres minérales 33), est inséré dans le fourreau 14. La tresse de protection externe 32 est décalottée de manière à venir se placer à l'extérieur du fourreau 14, autour de sa paroi externe, et plus particulièrement entre l'extrémité d'entrée 142 et la collerette 144. Une bague de sertissage 148 ou autre est alors prévue pour solidariser le fourreau 14 au câble 3. Cette disposition offre l'avantage d'éliminer tout risque de dégradation du matériau isolant 31 (et le cas échéant les fibres minérales 33) par les brins d'extrémité de la tresse 32 lorsque celle-ci est métallique.

Les fils conducteurs 30 sont connectés à l'élément de mesure 2 logé dans le fourreau 14, de sorte que lesdits fils 30 enrobés dans le matériau isolant 31 arrivent dans la partie active 143 dudit fourreau.

Si les deux fils conducteurs 30 sont chacun réalisés dans un matériau différent (ex : « CHRMEL/ALUMEL »), il suffit de les connecter ensemble par une soudure dite « point chaud » pour former un thermocouple 2, simplifiant de fait la conception de la sonde S (figure 4).

Dans le cas où l'élément de mesure 2 se présente sous la forme d'une résistance de mesure à couche mince, sonde de platine (PT50, PT100, PT200, PT500 ou PT1000) ou thermistance (NTC ou PTC) par exemple (figure 5), les deux fils conducteurs 20 de la résistance 2 sont raccordés par soudage aux fils 30. De façon usuelle, les fils 20 et 30 sont mis au contact à leurs extrémités libres par une soudure symbolisée en 21.

Dans le cas d'un thermocouple (figure 4), l'élément de mesure 2 est avantageusement logé dans une enveloppe en céramique 147 agencée au niveau de l'extrémité fermé 141 du fourreau 14. Cette enveloppe 147 est noyée dans un ciment réfractaire 148, l'ensemble formant une protection thermique supplémentaire préservant l'intégrité physique de l'élément de mesure 2 lorsque celui-ci est soumis à des températures élevées, par exemple supérieures à 600°C. Cette configuration est similaire à celle employée avec un élément de mesure 2 consistant en une sonde de platine ou une thermistance (figure 5), toutefois sans avoir à disposer l'enveloppe en céramique 147, puisque sonde et thermistance sont isolées par nature.

Après de nombreuses expérimentations, la demanderesse a constaté de manière surprenante et inattendue que le liant adhésif utilisé dans le matériau isolant électrique 31 (et le cas échéant dans les fibres minérales 33) comprenait des composés chimiques qui se liquéfiaient et/ou qui se vaporisaient sous l'action de la chaleur et devenaient conducteurs. Ce changement d'état apparait lorsque le liant est chauffé dans des conditions normales de pression, à une température comprise entre 300°C et 600°C. Ce phénomène a été constaté au moins dans la partie active 143 du fourreau 14. A l'extérieur du fourreau 14, le passage en phase liquide, puis vapeur, des composés chimiques perturbateurs, ne crée pas des conditions de court-circuit, car la vapeur, dès sa génération, s'échappe du câble 3 par la tresse 32. Fort de ces constatations, la solution technique préconisée par l'invention consiste à éliminer préalablement ces composés chimiques perturbateurs de l'intérieur du fourreau 14, pour éviter qu'ils ne produisent, par stagnation, des courts-circuits entre les fils conducteurs 30 et/ou des fuites de signal vers ledit fourreau.

La partie active 143 du fourreau 14 étant la plus exposée aux hautes températures, elle doit en conséquence être traitée en priorité pour éliminer les composés chimiques perturbateurs du matériau isolant électrique 31 (et le cas échéant dans les fibres minérales 33) avant l'utilisation effective de la sonde S.

Conformément à l'invention, avant que la sonde S ne soit utilisée pour la première fois pour mesurer une température, on chauffe le fourreau 14 à une température telle que le matériau isolant électrique 31 (et le cas échéant dans les fibres minérales 33) contenu au moins dans la partie active 143 dudit fourreau émette des vapeurs. Ces vapeurs proviennent du liant qui est appliqué par enduction sur les fibres de silice. Le poids de ce liant représente généralement entre 3% et 7% du poids du câble 3. Par exemple, le poids du liant peut varier entre environ 1 g et 2 g par mètre de câble 3. Cette proportion peut varier de manière importante selon le fabricant de câble 3, la conception intrinsèque du câble 3 (2 fils pour un simple thermocouple, jusqu'à 8 fils pour deux sondes PT100 chacune montée en 4 fils). Ces vapeurs sont ensuite évacuées hors du fourreau 14, jusqu'à épuisement de celles-ci.

Le chauffage et l'évacuation des vapeurs sont maintenus jusqu'à ce que le matériau isolant électrique 31 contenu au moins dans la partie active 143 du fourreau 14 soit exempt de composés chimiques susceptibles de se liquéfier et/ou de se vaporiser lorsque ledit liant est chauffé dans des conditions normales de pression, à une température comprise entre 300°C et 600°C. A l'issue du traitement, le liant adhésif contenu dans le matériau isolant 31 (et le cas échéant dans les fibres minérales 33) se trouve sous forme de poudre inerte et sèche, ce qui montre par ailleurs que la sonde S utilisée a bien fait l'objet du procédé conforme à l'invention.

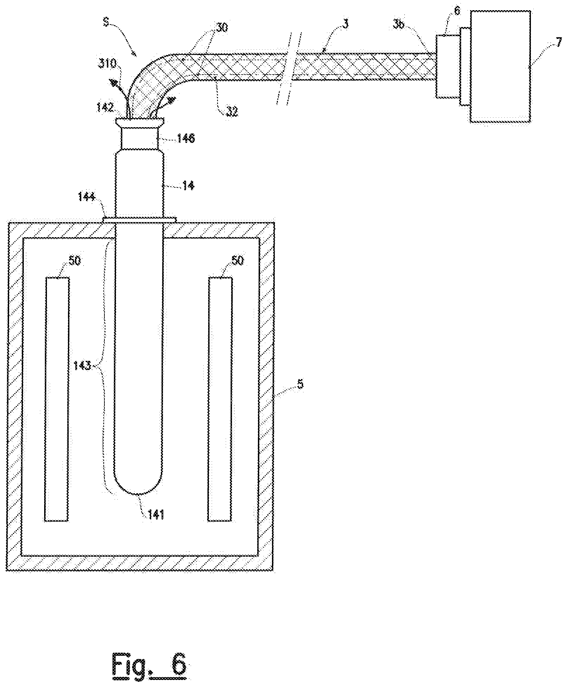

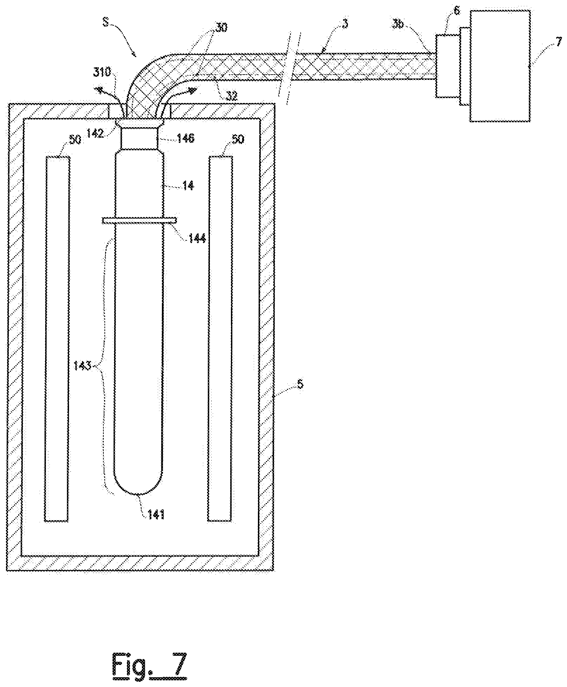

Pour cela, et comme cela apparait sur la figure 6, au moins la partie active 143 du fourreau 14 est placée dans un appareil de chauffage 5. Sur la figure 7, le fourreau 14 est inséré sur toute sa longueur dans l'appareil de chauffage 5.

L'appareil de chauffage 5 peut se présenter sous la forme d'un four dans lequel sont logées des résistances chauffantes 50. Le maintien du fourreau 14 sur l'appareil de chauffage 5 s'effectue par tout moyen de fixation approprié, et par exemple par une fixation similaire à celle illustrée sur la figure 11.

Le fourreau 14 est ainsi soumis à un chauffage sous une température d'au moins 300°C de façon à éliminer les composés chimiques perturbateurs contenus dans le matériau isolant 31 (et le cas échéant dans les fibres minérales 33), et qui sont responsables des dysfonctionnements constatés. De bons résultats sont obtenus lorsque le fourreau 14 est chauffé dans des conditions normales de pression, dans une plage de température comprise entre 300°C et 600°C, les meilleurs résultats étant obtenus avec un chauffage supérieur à 400°C, notamment entre 450°C et 500°C. Selon la quantité de liant adhésif contenu dans le matériau isolant 31, le chauffage peut être maintenu pendant 24 heures, 48 heures ou 72 heures. Durant le chauffage, les composés chimiques perturbateurs se vaporisent, passant d'un état solide à un état gazeux.

Dans de telles conditions de chauffage, la demanderesse a en effet pu constater que la sonde S ne présente plus aucun signe de dysfonctionnement lorsque la partie active 143 du fourreau 14 était soumise, en usage, à des températures comprises entre 300°C et 600°C, et même au-delà, par exemple à des températures d'environ 1000°C.

En revanche, il n'est pas nécessaire de traiter le matériau isolant 31 au-delà de l'extrémité d'entrée 142 du fourreau 14, et même au-delà de la collerette 144. En effet, en utilisation, la température de la pièce ou du fluide à mesurer décroît au fur et à mesure que l'on s'éloigne du fourreau 14 pour descendre à des valeurs bien inférieures à 300°C à l'approche de la connectique 6, si bien que l'intégrité du câble 3est préservée dans ces zones refroidies. Les composés chimiques perturbateurs du matériau isolant 31 (et le cas échéant des fibres minérales 33) restent solides et n'impliquent pas de problèmes de mesure, puisque ledit matériau n'atteint pas les températures critiques pour lesquelles ces composés se liquéfient et/ou se vaporisent. Cependant, dans la portion du câble 3 qui n'est pas située à l'intérieur du fourreau 14, mais qui est proche de l'extrémité d'entrée 142, peut toutefois être soumise à de fortes températures. Ces dernières peuvent être supérieures à 300 °C, voire 400°C ou même 600°C et plus si un matériau calorifuge enveloppe le tuyau T sur lequel est fixée la sonde S. Dans ce cas, les composés chimiques perturbateurs s'évaporent et disparaissent dans l'atmosphère dès leur génération, traversant instantanément la tresse 32 du câble 3, sans créer de court-circuit.

Comme cela apparait sur les figures 2 et 12, les vapeurs 310 générées par le chauffage du fourreau 14, s'évacuent vers l'extérieur dudit fourreau 14. Les vapeurs 310 passent au travers de la tresse 32, grâce à l'entrelacement de ses brins constitutifs, puis par le jeu J entre ladite tresse et la paroi interne du fourreau 14. On ménage une ouverture 1420 au niveau de l'extrémité d'entrée 142, de sorte que les vapeurs 310 puissent s'évacuer par cette ouverture, en remontant le long de la paroi interne du fourreau 14. En pratique, l'ouverture 1420 est ménagée lors de la réalisation du sertissage 146.

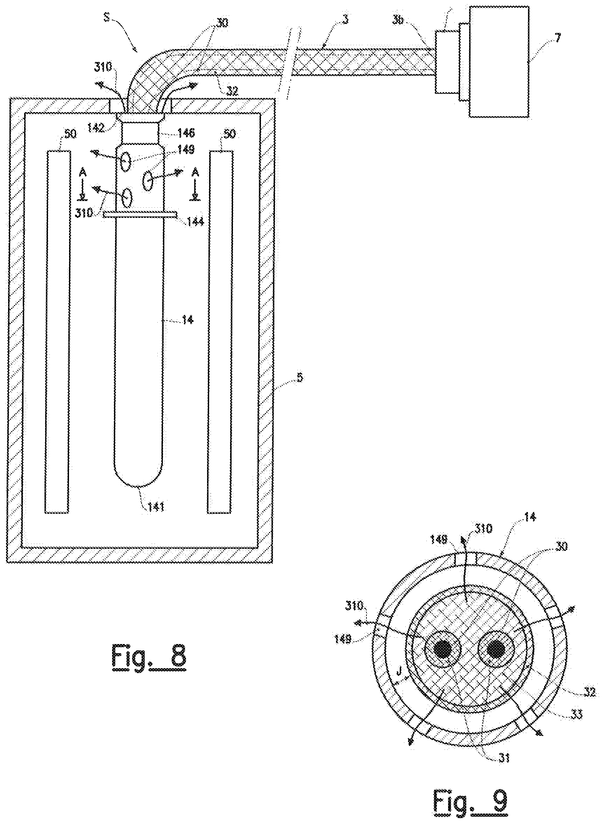

Dans une variante de réalisation illustrée sur les figures 8 et 9, des trous 149 sont ménagés dans la paroi latérale du fourreau 14 pour favoriser et/ou accélérer l'évacuation des vapeurs 310. Leur diamètre est par exemple compris entre 0,5 mm et 2 mm. Ils sont répartis sur la circonférence du fourreau 14 entre la collerette 144 et l'extrémité d'entrée 142, hors de la partie active 143, cette dernière devant rester parfaitement étanche par rapport au fluide dont la température doit être mesurée. Les vapeurs 310 s'évacuent en passant au travers de la tresse 32, puis par le jeu J entre la tresse 32 et le fourreau 14, et enfin par les trous 149.

La quantité de liant adhésif contenu dans le matériau isolant 31, la taille des orifices 1420 et 149, et la température de chauffage, sont les trois principaux paramètres qui déterminent la durée du chauffage pour une sonde S donnée.

Après traitement, la sonde S est retirée de l'appareil de chauffage 5. On note que des traces de liant adhésif subsistent dans le matériau isolant 31 (et le cas échéant des fibres minérales 33) contenu au moins dans la partie active 143 du fourreau 14, sous forme de poudre inerte et sèche, de couleur grise, et que des condensats de vapeur se sont déposés à l'extérieur dudit fourreau, sur les parties froides du câble 3, sous forme de poudre blanche, à base notamment de silice. Cette poudre est « éphémère » dans le sens où elle ne reste pas longtemps sur le câble 3 lorsqu'on manipule ce dernier. En effet, on peut constater que cette poudre s'échappe, tombe et/ou s'envole lorsque le câble 3 est manipulé, sans plus laisser de trace, comme de la poussière. Ces traces de poudre montrent par ailleurs que la sonde utilisée a bien fait l'objet du traitement conforme à l'invention.

La sonde S ainsi traitée est alors prête à être utilisée sans risquer d'engendrer des dysfonctionnements (microcoupures, courts-circuits, etc.) lors de la transmission des informations délivrées par l'élément de mesure 2. L'absence de composés chimiques perturbateurs dans le liant du matériau isolant 31 (et le cas échéant dans les fibres minérales 33), au moins au niveau de la partie active 143, garantit une qualité optimale dans la transmission des signaux délivrés par l'élément de mesure 2 en direction de l'appareil 7, aucune perte de signal n'étant constatée. En outre, la température ambiante à l'extérieur du tuyau T (ou de la pièce dont la température doit être mesurée) décroissant rapidement, aucune liquéfaction et/ou vaporisation des composés perturbateurs du liant contenu dans le matériau isolant 31 (et le cas échéant dans les fibres minérales 33) du câble 3 non traité, ne crée d'accumulation susceptible de créer un court-circuit préjudiciable.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de l'esprit et de la portée de l'invention. En particulier :
- Le chauffage du fourreau 14 peut être réalisé en plaçant directement ledit fourreau sur une plaque électrique chauffante.
- Le fourreau 14 peut être pourvu à la fois de l'ouverture 1420 et des trous 149.

## Revendications

1. Procédé de réalisation d'une sonde de mesure de la température d'une pièce ou d'un fluide, ladite sonde comprenant :
- un fourreau de protection (14) dans lequel est installé un élément de mesure de la température (2), lequel fourreau présente une extrémité fermée (141), une extrémité (142) d'entrée de fils, et une partie active (143) qui, en usage, est en contact avec la pièce ou le fluide dont la température doit être mesurée,
- un câble (3) présentant une première extrémité (3a) reliée au fourreau (14) au niveau de son extrémité d'entrée (142) et une seconde extrémité (3b) adaptée pour être reliée à un appareil (7) de traitement des signaux délivrés par l'élément de mesure (2),
ledit procédé consistant à :
- utiliser un câble souple (3) formé par des fils conducteurs (30) enrobés dans un matériau isolant électrique (31) à base de fibres minérales imprégnées d'un liant adhésif, lesdits fils (30) et ledit matériau isolant (31) étant entourés d'une tresse de protection externe (32),
- connecter les fils conducteurs (30) à l'élément de mesure (2), de sorte que lesdits fils (30) enrobés dans le matériau isolant électrique (31) arrivent dans la partie active (143) du fourreau (14),
**se caractérisant par le fait que** :
- avant la première utilisation de la sonde (S) pour mesurer une température, ledit procédé comprend des étapes consistant à :
∘ chauffer le fourreau de protection (14) à une température telle que le matériau isolant électrique (31) contenu au moins dans la partie active (143) dudit fourreau émette des vapeurs (310),
∘ évacuer ces vapeurs hors du fourreau (14) jusqu'à épuisement de celles-ci,
- les étapes de chauffage du fourreau de protection (14) et d'évacuation des vapeurs (310) sont maintenues jusqu'à ce que le liant adhésif du matériau isolant électrique (31) contenu dans la partie active (143) dudit fourreau se trouve sous forme de poudre sèche.

2. Procédé selon la revendication 1, dans lequel on ménage une ouverture (1420) au niveau de l'extrémité d'entrée (142) du fourreau de protection (14), les vapeurs (310) formées lors du chauffage du fourreau de protection (14) s'évacuant par cette ouverture (1420).

3. Procédé selon la revendication 1, dans lequel on ménage des trous (149) dans la paroi latérale du fourreau de protection (14), par lesquels s'évacuent les vapeurs (310) formées lors du chauffage dudit fourreau.

4. Procédé selon l'une des revendications précédentes, dans lequel l'étape de chauffage est réalisée en plaçant au moins la partie active (143) du fourreau de protection (14) dans un appareil de chauffage (5).

5. Procédé selon l'une des revendications précédentes, dans lequel on chauffe le fourreau de protection (14) dans des conditions normales de pression, dans une plage de température comprise entre 300°C et 600°C.

6. Procédé selon la revendication 5, dans lequel la plage de température est comprise entre 450°C et 500°C.

7. Procédé selon l'une des revendications précédentes, dans lequel on maintient le chauffage pendant au moins 24 heures.

8. Procédé selon la revendication 7, dans lequel le chauffage est maintenu pendant 48 heures.

9. Procédé selon la revendication 7, dans lequel le chauffage est maintenu pendant 72 heures.

## Patentansprüche

1. Verfahren zur Herstellung eines Sensors zur Messung der Temperatur eines Teils oder eines Fluids, wobei der Sensor umfasst:
- eine Schutzhülle (14), in welcher ein Element zur Messung der Temperatur (2) installiert ist, wobei die Hülle ein geschlossenes Ende (141), ein Ende (142) zur Einführung von Drähten und einen aktiven Teil (143), welcher sich im Gebrauch in Kontakt mit dem Teil oder dem Fluid befindet, dessen Temperatur gemessen werden soll, aufweist,
- ein Kabel (3), das ein erstes Ende (3a), das mit der Hülle (14) an deren Einführungsende (142) verbunden ist, und ein zweites Ende (3b), das dafür ausgelegt ist, mit einer Vorrichtung (7) zur Verarbeitung der von dem Messelement (2) gelieferten Signale verbunden zu werden, aufweist, wobei das Verfahren in Folgendem besteht:
- Verwenden eines flexiblen Kabels (3), das von Leitungsdrähten (30) gebildet wird, die mit einem elektrisch isolierenden Material (31) auf der Basis von mit einem adhäsiven Bindemittel getränkten Mineralfasern ummantelt sind, wobei die Drähte (30) und das isolierende Material (31) von einem äußeren Schutzgeflecht (32) umgeben sind,
- Verbinden der Leitungsdrähte (30) mit dem Messelement (2), derart, dass die mit dem elektrisch isolierenden Material (31) ummantelten Drähte (30) bis in den aktiven Teil (143) der Hülle (14) hineinführen,
und **dadurch gekennzeichnet ist, dass**:
- vor der ersten Verwendung des Sensors (S) zum Messen einer Temperatur das Verfahren die folgenden Schritte umfasst:
o Erwärmen der Schutzhülle (14) auf eine solche Temperatur, dass das elektrisch isolierende Material (31), das wenigstens in dem aktiven Teil (143) der Hülle enthalten ist, Dämpfe (310) abgibt,
o Ableiten dieser Dämpfe aus der Hülle (14), bis keine mehr vorhanden sind,
- die Schritte der Erwärmung der Schutzhülle (14) und der Ableitung der Dämpfe (310) so lange durchgeführt werden, bis das adhäsive Bindemittel des elektrisch isolierenden Materials (31), das im aktiven Teil (143) der Hülle enthalten ist, in Form von trockenem Pulver vorliegt.

2. Verfahren nach Anspruch 1, wobei eine Öffnung (1420) am Einführungsende (142) der Schutzhülle (14) ausgebildet wird, wobei die Dämpfe (310), die bei der Erwärmung der Schutzhülle (14) gebildet werden, über diese Öffnung (1420) abgeleitet werden.

3. Verfahren nach Anspruch 1, wobei Löcher (149) in der Seitenwand der Schutzhülle (14) ausgebildet werden, durch welche die Dämpfe (310), die bei der Erwärmung der Hülle gebildet werden, abgeleitet werden.

4. Verfahren nach einem der vorhergehenden Ansprüche, wobei der Schritt des Erwärmens durchgeführt wird, indem der aktive Teil (143) der Schutzhülle (14) in einer Heizvorrichtung (5) angeordnet wird.

5. Verfahren nach einem der vorhergehenden Ansprüche, wobei die Schutzhülle (14) unter normalen Druckbedingungen in einem Temperaturbereich zwischen 300 °C und 600 °C erwärmt wird.

6. Verfahren nach Anspruch 5, wobei der Temperaturbereich zwischen 450 °C und 500 °C liegt.

7. Verfahren nach einem der vorhergehenden Ansprüche, wobei die Erwärmung mindestens 24 Stunden aufrechterhalten wird.

8. Verfahren nach Anspruch 7, wobei die Erwärmung 48 Stunden aufrechterhalten wird.

9. Verfahren nach Anspruch 7, wobei die Erwärmung 72 Stunden aufrechterhalten wird.

## Claims

1. Method for producing a temperature sensor for measuring the temperature of a component or of a fluid, the said sensor comprising:
- a protective sheath (14) inside which a temperature-measuring element (2) is installed, which sheath has a closed end (141), a wire-inlet end (142), and an active part (143) which, in use, is in contact with the component or the fluid the temperature of which is to be measured,
- a cable (3) having a first end (3a) connected to the sheath (14) at its input end (142) and a second end (3b) designed to be connected to an apparatus (7) for processing the signals delivered by the measurement element (2),
the said method consisting in:
- using a flexible cable (3) formed of conducting wires (30) covered in an electrically insulating material (31) based on inorganic fibres impregnated with an adhesive binder, the said wires (30) and the said insulating material (31) being surrounded by an external protective braid (32),
- connecting the conducting wires (30) to the measurement element (2) so that the said wires (30) covered with the electrically insulating material (31) arrive in the active part (143) of the sheath (14),
**characterized in that:**
- prior to first use of the sensor (S) for measuring a temperature, the said method comprises steps consisting in:
∘ heating the protective sheath (14) to a temperature such that the electrically insulating material (31) contained at least in the active part (143) of said sheath emits vapours (310),
∘ removing these vapours from the sheath (14) until no such vapours remain,
- the steps of heating the protective sheath (14) and of removing the vapours (310) are sustained until such point as the adhesive binder of the electrically insulating material (31) contained in the active part (143) of said sheath is in the form of dry powder.

2. Method according to Claim 1, in which an opening (1420) is made at the input end (142) of the protective sheath (14), the vapours (310) formed during the heating of the protective sheath (14) being removed via this opening (1420).

3. Method according to Claim 1, in which holes (149) are formed in the lateral wall of the protective sheath (14), via which holes the vapours (310) formed during the heating of said sheath are removed.

4. Method according to one of the preceding claims, in which the heating step is performed by placing at least the active part (143) of the protective sheath (14) in a heating appliance (5).

5. Method according to one of the preceding claims, in which the protective sheath (14) is heated under standard pressure conditions, in a temperature range of between 300°C and 600°C.

6. Method according to Claim 5, in which the temperature range is between 450°C and 500°C.

7. Method according to one of the preceding claims, in which the heating is sustained for at least 24 hours.

8. Method according to Claim 7, in which the heating is sustained for 48 hours.

9. Method according to Claim 7, in which the heating is sustained for 72 hours.
